# EUROPEAN PATENT SPECIFICATION

(11) **EP 3 065 935 B1**
(45) Date of publication and mention of the grant of the patent: **27.05.2020**
(21) Application number: 15702737.6
(22) Date of filing: 30.01.2015
(51) Int. Cl.: B29C 64/165, B29C 64/393, B29C 35/02, B33Y 10/00, B33Y 30/00, B33Y 50/02

(54) **FABRICATING THREE DIMENSIONAL OBJECTS**
HERSTELLUNG DREIDIMENSIONALER GEGENSTÄNDE
FABRICATION D'OBJETS TRIDIMENSIONNELS

(43) Date of publication of application: 14.09.2016
(73) Proprietor: Hewlett-Packard Development Company, L.P., Spring TX 77389 (US)
(72) Inventor: VILAJOSANA, Xavier, 08174 Sant Cugat del Valles (ES); DE PENA, Alejandro Manuel, 08174 Sant Cugat del Valles (ES); CORTES I HERMS, Sebastia, 08174 Sant Cugat del Valles (ES)
(74) Representative: Haseltine Lake Kempner LLP
(86) International application number: PCT/EP2015/051963
(87) International publication number: WO 2016/119889

(56) References cited:
- EP-A2- 1 466 718
- WO-A1-92/08566
- DE-A1-102011 053 205
- US-A1- 2002 149 137

## Description

### Background

Additive manufacturing systems that generate or fabricate three-dimensional objects on a layer-by-layer basis have been proposed as a potentially convenient way to produce three-dimensional objects.

In such additive manufacturing systems, energy sources may be used to heat a build material and an agent.

EP1466718 discloses a method of forming 3D objects using laser sintering by utilising a thermal vision system to feedback data to control both a zoned radiant heater system, and the power and scan speed of the laser.

DE 10 2011 053 205 A1 discloses an additive manufacturing method and an additive manufacturing apparatus for drying a binder selectively applied to a powder layer.

### Brief description of drawings

For a better understanding of the examples described herein, and to show more clearly how the examples may be carried into effect, reference will now be made, by way of non-limiting examples, to the following drawings in which:
Figure 1 shows an example of three dimensional objects to be printed;
Figure 2 shows examples of temperature curves during a fabrication process;
Figure 3 shows a further example of a temperature curve during a fabrication process;
Figure 4 shows further examples of temperature curves during a fabrication process;
Figure 5 shows an example of a method provided by the present disclosure;
Figure 6 shows examples of temperature curves according to an example of the present disclosure; and
Figure 7 shows an example of an apparatus according to the present disclosure.

### Detailed Description

A process of generating a tangible three-dimension object may comprise a series of stages which include forming a layer of build material, selectively delivering an agent (for example a fusing agent, which includes for example a coalescing agent and/or a coalescence modifier agent and/or some other form of agent) to at least one portion of a surface of the layer of build material, and temporarily applying energy to the layer of build material. The temporary application of energy may cause portions of the build material on which agent has been delivered, or has penetrated, to heat up above a point at which the build material and agent begin to coalesce. This temperature may be referred to as the fusing temperature. Upon cooling, the portions which have coalesced become solid and form part of the three-dimensional object being generated. These stages may then be repeated to form a three-dimensional object. Other stages and procedures may also be used with this process.

In the examples described herein an agent (which may comprise a coalescing agent and/or coalescence modifier agent, or other form of agent) can comprise fluids and is delivered using any appropriate fluid delivery mechanism, also referred to as an agent distributor. In one example the agents are delivered in droplet form. In one example, the coalescing agent may be a strong light absorber, for example, such as a pigment colorant.

An agent distributor, according to some examples described herein, may comprise a printhead or printheads, such as thermal printheads or piezoelectric printheads. In one example printheads such as suitable printheads used in commercially available inkjet printers may be used.

A coalescence modifier agent may be used for a variety of purposes. In one example, a coalescence modifier agent may be delivered adjacent to where coalescing agent is delivered, for example to help reduce the effects of lateral coalescence bleed (that is to help prevent a coalescing agent from bleeding into an adjacent area of build material). This may be used, for example, to improve the definition or accuracy of object edges or surfaces, and/or to reduce surface roughness. In another example, coalescence modifier agent may be delivered interspersed with coalescing agent, which may be used to enable object properties to be modified compared to portions of an object to which just coalescing agent has been applied.

In the examples described herein references to a build material may include, for example, a build material that is a powder-based build material. As used herein, the term powder-based material is intended to encompass both dry and wet powder-based materials, particulate materials, and granular materials. In one example the build material may be a normally weakly light absorbing polymer powder medium. In another example the build material may be a thermoplastic.

In the examples described herein, the three dimensional object may be built up by sequentially layering and fusing layers of build material one on top of another. Each layer of build material is deposited over the previous layer and forms a flat surface which is referred to herein as the build surface.

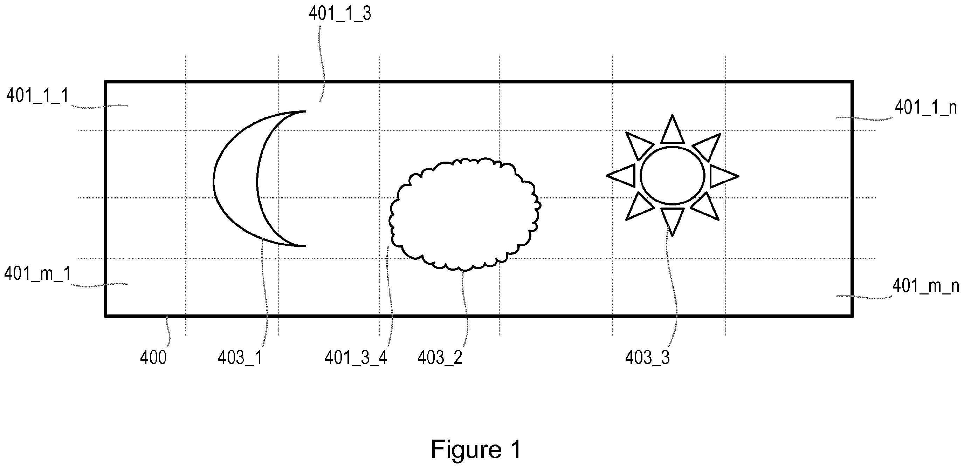

Figure 1 shows an example of objects 403_1, 403_2, 403_3 to be generated layer by layer, with Figure 1 showing the surface of a layer which generates a slice of the 3-D objects being generated. Successive layers of build material are deposited over the build surface or processing bed. In this example the build surface is divided into a plurality of zones 401. Each of the plurality of zones may be substantially the same size or may vary in size. The plurality of zones form an m x n array of zones 401_1_1 to 401_m_n. In the example shown in Figure 1, the first object 403_1 occupies five zones.

The build surface or processing bed is heated during generation of 3-D objects, for example using an energy source, such as a lamp or radiation source which heats the entire build surface, or a set of lamps or radiation sources for heating the zones of the processing bed.

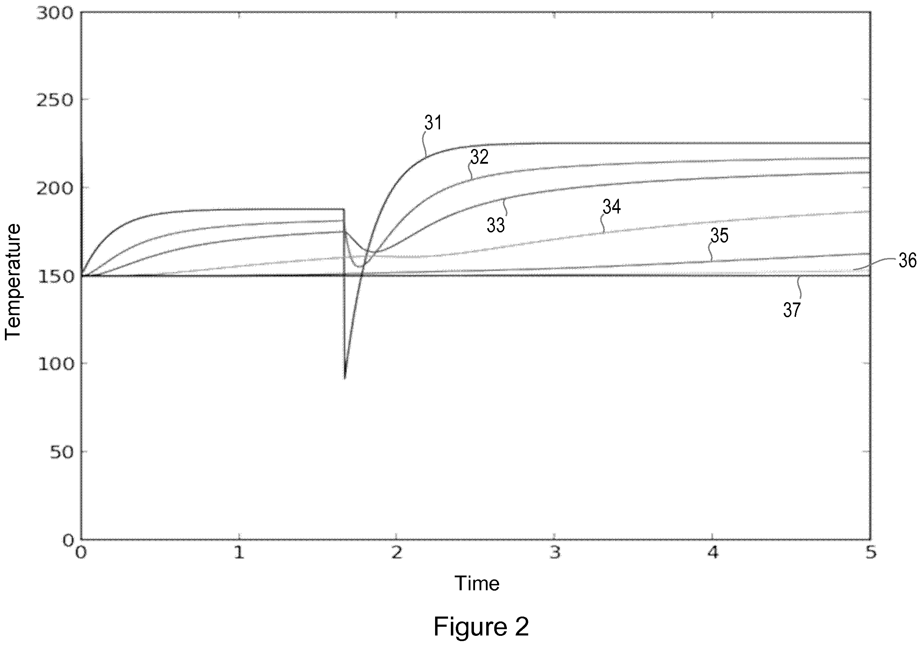

Figure 2 shows examples of temperature curves that correspond to different depths of a build surface (up to 1cm depth) that has been covered by an agent (for example a coalescing agent and/or coalescence modifier agent or other agent) during printing. Each curve represents the temperature at the surface or at a certain depth, respectively. For example, the curve labelled 31 illustrates the temperature at the surface of the agent covered part, the curve 32 the temperature at a depth of 0.05 cm, the curve 33 the temperature at a depth of 0.11 cm, the curve 34 the temperature at a depth of 0.26 cm, the curve 35 the temperature at a depth of 0.53 cm, the curve 36 the temperature at a depth of 0.79 cm, and the curve 37 the temperature at a depth of 1 cm. The downward spike represents the time when an agent is deposited over the build material (e.g. during printing or depositing an agent). The temperature prior to the spike represents a pre-heat temperature applied to the build material, and the temperature after the spike corresponds to a fusing temperature that is applied to coalesce the areas of build material with agent deposited thereon.

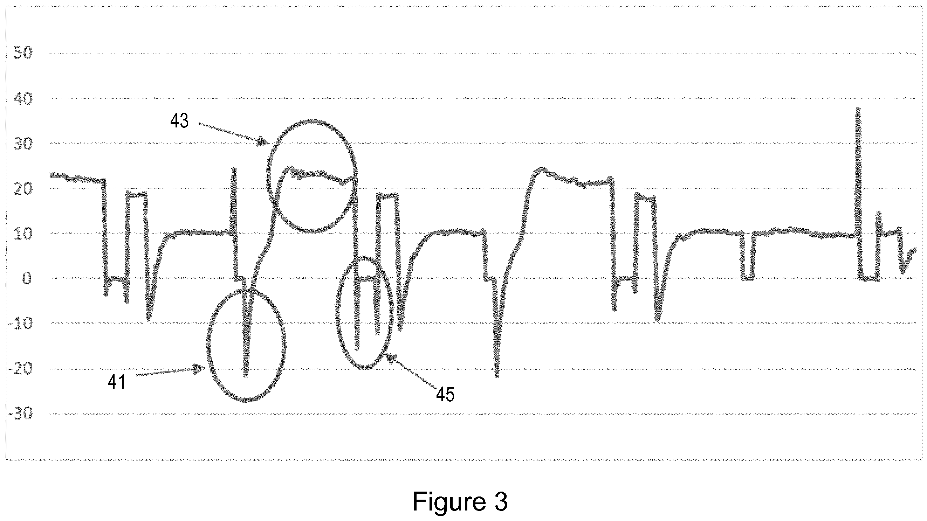

Figure 3 illustrates traces of the heating effect caused by an energy source, for example halogen lamps, over an area which has been printed or covered with an agent. Heating of the build surface, for example by halogen lamp fusing, provides melting but also uncontrolled excess energy which is transmitted to the raw build material (i.e. areas of the build material which have no agent deposited thereon, also referred to herein as a white area). The spike labelled 41 corresponds to a dip in temperature when an agent is deposited, as explained previously in Figure 2. The area labelled 43 corresponds to a period when an energy source, such as a halogen lamp, is heating the portions of build material with coalescing agent to the fusing temperature, i.e. to the temperature at which areas of the build material having coalescing agent thereon begin to fuse. The area labelled 45 corresponds to a period when a recoating mechanism shades the build material from the energy source while the recoating mechanism is laying a new layer of build material, thus causing the shaded area to fall in temperature.

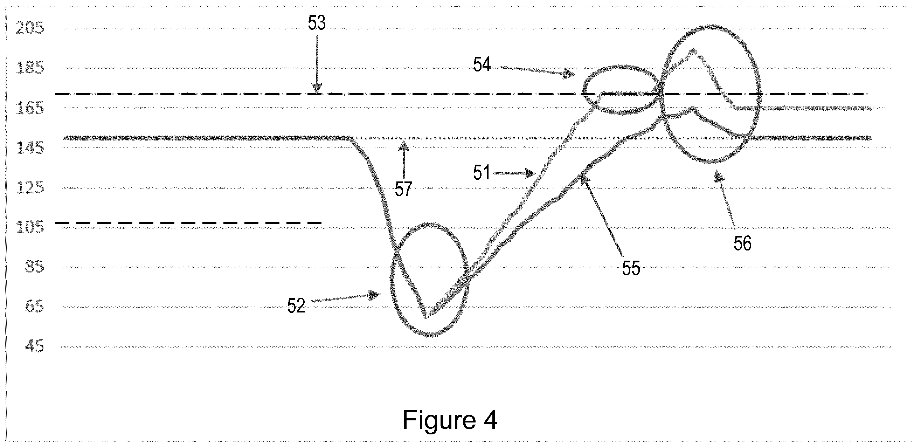

Figure 4 illustrates an example of temperature evolution during the stages of printing or distributing an agent on a build surface and heating the build surface to the fusing temperature so that the areas with build material and printed agent start to fuse. The curve labelled 51 illustrates an example of a temperature curve for the agent covered portions of the build surface during a build process, the dashed line 53 representing the target temperature for fusing. The curve labelled 55 illustrates an example of a temperature curve for the raw build material during a build process, the dotted line 57 representing the target temperature for the raw build material. In some examples, the target temperature for the raw build material corresponds to the pre-heating temperature. The dip in temperature (labelled with reference 52) may be caused by a carriage shielding the build surface from the energy source, or by an agent distributor depositing an agent, which can lead to a dip in temperature, e.g. as explained above in Figures 2 and 3. In response to the dip in temperature, energy may be applied via the energy source to compensate for this dip in temperature. In the period labelled 56, this can lead to overheating. This can result in an excess of energy which reduces selectivity by unnecessarily increasing the temperature of the areas with no coalescing agent (i.e. raw build material).

The examples described herein are related to a method and apparatus for heating a surface during the fabrication of a 3-D object, that is, controlling temperature in an apparatus for generating a three-dimensional object. The performance of an apparatus for three dimensional printing can depend on the repeatability of the process and consistency between builds. In order to obtain consistently high quality builds, in an example the temperature distribution of the build surface may be controlled to be within a narrow range (for example, ±1ºC). Homogeneity of the temperature distribution over the build surface can also be desirable. This may involve adapting the heat distribution and temperature measurement dynamically to react quickly to changing surface heat distributions. At the same time fine grain temporal temperature control may be provided to enable selective energy provision to a heating subsystem so that material phase changes are carried out at the correct time and with the optimal amount of energy, without jeopardizing material selectivity. The material selectively relates to a surface temperature gap that appears when applying the same amount of energy to an area that is covered by agent with respect to an area that is not covered by agent. In examples described herein, the material selectivity, or surface temperature gap, is large enough such that areas covered with agent can heat to the required temperature for fusing, while areas not covered with agent do not start to fuse.

An example described herein relates to a method of controlling the energy applied by an energy source to a layer of build material on a build surface, such that at each stage of processing (e.g. spreading, printing/distributing coalescing agent/coalescence modifier agent, fusing) the layer of build material is at an optimal temperature for producing good part quality.

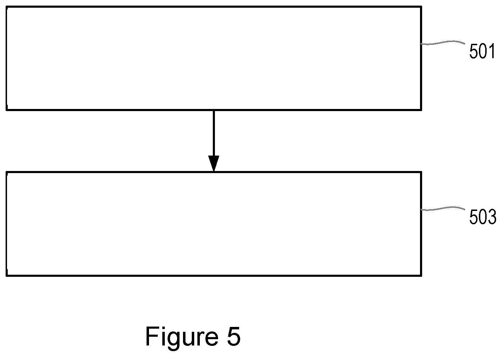

Figure 5 shows an example of a method according to the present disclosure. The method comprises controlling the energy radiated by an energy source during a first stage of the fabrication process using a first temperature feedback signal from a first location on the surface, 501. The method comprises controlling the energy radiated by an energy source during a second stage of the fabrication process using a second temperature feedback signal from a second location on the surface, 503.

For example, the first stage may relate to a pre-heating stage of the fabrication process, during which time the first temperature feedback signal is received from a region of the build surface which comprises raw build material, e.g. white powder. Thus, in such an example, the method comprises monitoring the temperature of the first location, wherein the first location has raw build material thereon, and using this monitored temperature as the first temperature feedback signal.

The second stage may comprise, for example, a fusing stage during which a region of build material having an agent thereon is heated to the fusing temperature, during which time the second temperature feedback signal is received from a region of the build surface which comprises printed or treated build material (i.e. build material having an agent deposited thereon). Thus, in such an example the method comprises monitoring the temperature of the second location, wherein the second location has an agent deposited thereon, and using this monitored temperature as the second temperature feedback signal.

Therefore, in one example a first stage comprises a pre-heating stage, while a second stage comprises a fusing stage.

According to the invention, the method comprises controlling the energy source to heat the surface to a first target temperature during the first stage based on the first temperature feedback signal, and controlling the energy source to heat the surface to a second target temperature during the second stage based on the second temperature feedback signal. In one example, the entire build surface (or powder bed) may be heated uniformly to the pre-heat temperature during the first stage, and the entire build surface (or powder bed) heated uniformly to the fusing temperature during the second stage. In another example, different zones can have different target temperatures and feedback signals depending upon whether or not they have an agent in them. In another example, the temperature of a particular zone may be heated to a pre-heat temperature during a first stage and a fusing temperature during a second stage, with feedback signals taken from different areas from within that zone during different stages, e.g. from a white area (with no agent applied theron) of that zone during the first stage, and from an area covered with agent during the second stage. A build process may therefore comprise different phases or stages, with a temperature reference for each phase or stage being determined or selected according to what action is being taken in that phase or stage. In one example, the point (or position) at which temperature is read may be changed dynamically. Different temperature reference points may also be handled simultaneously, for example for different and/or independent processes.

In one example, a first temperature feedback signal is received from a heat sensor, thermometer or thermal imaging camera positioned over the build surface. In some examples a second temperature feedback signal is received from a heat sensor, thermometer or thermal imaging camera positioned over the build surface. The first and second temperature feedback signals may monitor the temperature of the same area of the build surface, or different areas of the build surface such as adjacent, non-overlapping areas of the build surface or in some examples, different, unrelated areas of the build surface. In some examples, the first stage of the build process may be the stage between recoating the build surface with a new layer of build material and printing or distributing coalescence modifier agent or coalescing agent onto the layer of build material. In another example, the first stage of the build process may be the stage between recoating the build surface with a new layer of build material to when a printed agent, such as a coalescence modifier agent or coalescing agent on the layer of build material has started to coalesce or melt. In some examples, the second stage may correspond to when the layer of build material is heated to the fusing temperature to melt regions of the layer of build material that have been printed with coalescing agent or coalescence modifier agent. In other examples, the first and second stages of the build process may correspond to different stages of the build process.

From the examples described above, a layer printing process can involve dividing the layer printing process (or fabrication process) into multiple stages or phases, where different objective temperatures and different measurement areas are used during the different phases. As an example, an objective of a first phase might be to reach a stable and homogeneous temperature all over the print bed or build surface, using as reference the raw powder surface temperature. However, when the cross-section is printed with an agent, for example a coalescing agent and/or coalescence modifier agent and/or other agent, as noted above certain events can cause a decrement of the temperature. First, when the agent material is printed a carriage which performs this operation can shade a region of the build surface from the heating system, which can result in a slight decrement of the temperature of the build surface. Second, an agent being deposited by the pens depicting the cross-section can cause a temperature decrement accentuation on the printed area, compared to the remaining area(s) where no agent is applied. In one example, soon after the shaded area disappears a temperature controller detects the temperature decay on the bed and increases the energy applied, to recover the lost temperature. During this period, a printed part covered with agent accumulates more temperature and arrives at the melting point, while the powder covered area reaches the target temperature (thanks to the selectivity provided by the agent material). At that point, according to an example described herein, the melting of the cross section covered by agent is maintained by changing from using a first temperature feedback signal to using a second temperature feedback signal, i.e. changing the reference temperature measurement to the cross-section agent covered area. Changing the temperature feedback signal in this way can, in one example, avoid the temperature control mechanism tending to decrement the applied energy (as the target is reached) while a cross-section having coalescing agent thereon is still not completely fused with the build material.

In one example, after a period of time of using the second temperature feedback signal, for example several milliseconds, the material is melted, and the method can return to using the first temperature feedback signal, i.e. return to monitoring a raw build material region (white powder), since applying too much energy can decrement the selectivity between the agent covered part and the raw material part.

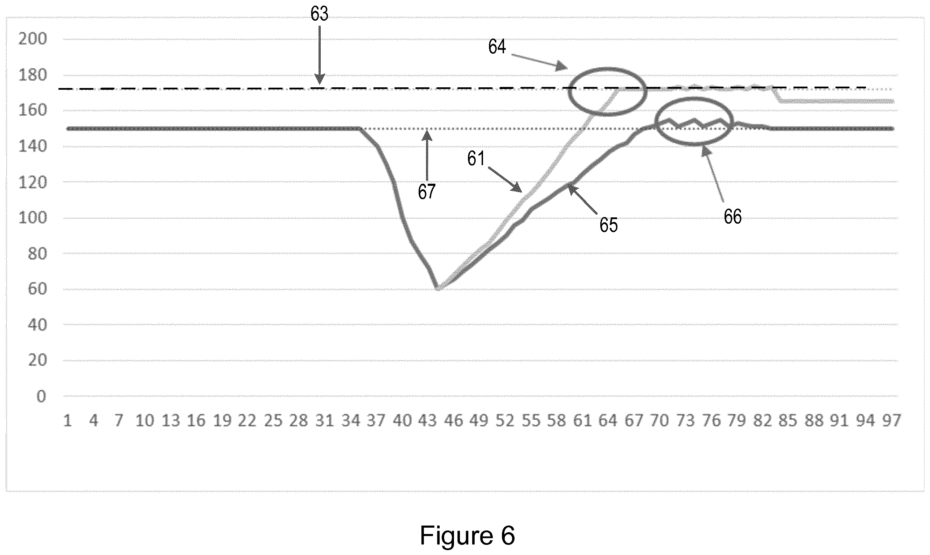

The effect of this change of temperature feedback signal is illustrated in the example of Figure 6. The curve labelled 61 illustrates an example of a temperature curve for areas of build material with agent deposited thereon during a build process, the dashed line 63 representing the target temperature for areas of build material with agent deposited thereon. The curve labelled 65 illustrates an example of a temperature curve for the raw build material during a build process, the dotted line 67 representing the target temperature for the raw build material. In this example the temperature is initially controlled to be at the target temperature 67 for raw build material (white target temperature), for example using a first temperature feedback signal which may be taken from a region of the build surface comprising raw build material. As mentioned above, the dip in temperature may be caused by a carriage shielding the build surface from the energy source, or by an agent distributor depositing an agent, both of which can cause the temperature to fall. At this moment, according to an example the system changes to use a second temperature feedback signal to control the energy source, for example taken from a region of the build material which is covered with agent. During this phase the temperature is controlled to reach a second target temperature corresponding to the target temperature 63 of the coalescing agent or coalescence modifier agent. The result is illustrated by reference 64 in Figure 6, whereby it can be seen that the temperature of the agent rises to match its target temperature 63. The part of the curve labelled 66 illustrates that energy modulation is based on the agent covered area causing a certain fluctuation of the temperature on the white (i.e. raw build material) area, however as delivered energy is optimal to maintain the state change of the material, there is not a significant temperature change on the raw build material (white area).

In this way energy usage can be optimized by changing the target temperature and reference for the sensors so that during the phase change of the material the energy source modulation is targeted to the melting temperature and not the white temperature.

In one example, a temperature control mechanism may use different reference temperature readings (e.g from white area, from a colored area, from an agent covered area, etc...) at different stages during the printing of a layer, or during the printing of different layers.

The phase changes may be triggered by events, timing constraints, temperature readings, or any other event that might benefit from a reference change so the printing process is improved. Thus, changing between first and second stages may be triggered by: an occurrence of an event; a time period elapsing; or a temperature signal reaching a threshold value.

An energy source control system, for example a lamp control subsystem, may be programmed to achieve a targeted stable and homogeneous temperature all over a printing bed. This may be achieved by controlling the amount of energy provided to a set of lamps that heat the printing or build surface. A set of temperature sensors (for example Infra Red sensors, thermal cameras, etc.) may be used to permanently read current surface temperature. Multiple sensors, thermo cameras, etc... may be used, each one monitoring an almost non-overlapping area on the printing bed.

In one example, a temperature map is built using input from sensors and used to feed the lamp control loop. In addition, at each printing layer, the image cross-section information can be reported to the lamp control loop. The control loop can compute the energy to be applied to the lamp sub-system according to its location, current temperature, and target temperature and image information. A temperature control mechanism according to an example described herein may be provided to match each sensor position with the position of the images being printed, and therefore understand what temperature readings correspond to what parts of the image. A position calibration mechanism may be used to determine the previously mentioned matching.

In one example, determining the first location or the second location comprises analysing image data received from thermal or optical imaging to determine a region of the build material having agent deposited thereon, or a region of the build material having no agent deposited thereon. In another example determining the first location or the second location comprises analysing specification data of the 3-D object to determine a region of the build material having agent deposited thereon, or a region of the build material having no agent deposited thereon. In one example, the region or zone to be monitored, or the region or zone to be monitored for providing the temperature feedback signal, can be selected based on the percentage of agent found in that region or zone.

In one example, the operation of an energy source control system can be divided into phases or stages which target different purposes. For example, one objective might be to keep the raw build material (i.e. white) area with a stable temperature, and right after depositing an agent (i.e. after a printing process) heat up the agent and maintain the state change temperature until the material is fused. At that point a temperature reference change is performed, as described above, so that the melting point is maintained for the necessary amount of time.

The examples described herein may be extended to include multiple stages or phases with multiple reference points or multiple different temperature feedback signals, for example monitoring the agent temperature during one stage or point, monitoring an inhibitor at some other stage or point, monitoring raw build material (white areas) at some other stage or point, monitoring treated build material (or colored areas) at another stage or point.

As an example, the following procedure illustrates the stages that may occur during the printing of a layer:

Stage 1 - the target temperature is set to the desired powder temperature (i.e. desired target temperature for raw build material, or white powder).

Stage 2 - An energy source (for example a heating subsystem) modulates energy according to a first temperature feedback signal received from a white area, i.e. received from a region comprising raw build material. This may involve using a white control zone or white zones on the print bed or build surface. In one example, image information may be used to discard those parts on the build surface that have agent or parts printed thereon.

Stage 3 - A second stage is triggered, for example within a predetermined period after depositing agent. At this point energy source modulation may be kept to the temperature readings from white or raw build material (i.e. first temperature feedback signal used) until the agent material starts the stage change, i.e. starts to melt. Then, the target temperature of the heating subsystem is changed to the melting temperature of the material (i.e. a second target temperature), and the sensor readings are obtained from areas covered with agent (i.e. a second temperature feedback signal is used). This can be either from parts of the image being printed (for example based on image information) or from a control area on the printbed covered by agent. In the latter, an area of the printbed can be covered by agent specifically for monitoring purposes, for example corresponding to an area which has a temperature sensor provided for this purpose, while in the former the agent from a known area of the image being printed is used as a reference point.

Stage 4 - After a period of time, for example after a sufficient amount of time necessary to melt the agent covered area, or after a sufficient amount of time for areas covered with agent to fuse with a build material, the target temperature is changed again to the desired powder temperature (white), the first target temperature. The sensor input is also changed to the raw build material area, i.e. to using the first temperature feedback signal, such that the temperature is stabilized to this new target.

It is noted that some examples described herein can help improve a method of fabricating a 3-D object by improving temperature stability during the printing process. Some examples can improve and stabilize a melting or fusing process without the use of excess energy nor loss of selectivity. The examples provide optimized energy consumption with reduction of surface over-heating, and can improve an overall printing process as a stable temperature can help favour the quality of a 3-D object being fabricated, and improve its mechanical properties.

According to one example, controlling the energy radiated by an energy source comprises heating an entire surface of a build surface to a first or second target temperature, or heating a region of the build surface to the first or second target temperature. For example, a first region having raw build material may be controlled to be at a first target temperature, and a second region having build material with agent deposited thereon may be controlled to be at a second target temperature.

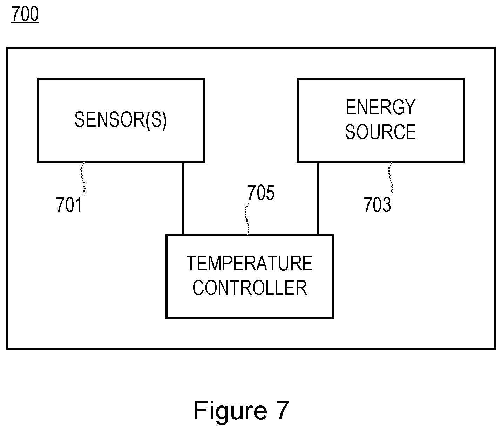

Figure 7 shows an example of an apparatus 700 for generating a 3-D object. The apparatus comprises at least one sensor 701 to monitor the temperature of a plurality of regions of a surface, and to output at least one temperature feedback signal for each of the plurality of regions. The apparatus 700 comprises an energy source 703 (for example a set of lamps which radiate different zones of a printbed). The apparatus 700 comprises a temperature controller 705 to control the energy radiated by the energy source 703 during a first stage of the build process using a first temperature feedback signal received from a first location or region, and to control the energy radiated by the energy source 703 during a second stage of the build process using a second temperature feedback signal received from a second location or region.

According to the invention, the temperature controller 705 controls the energy source to heat the surface to a first target temperature during the first stage based on the first temperature feedback signal, and controls the energy source to heat the surface to a second target temperature during the second stage based on the second temperature feedback signal. The first target temperature may comprise, for example, the target temperature of a raw build material. The second target temperature may comprise, for example, the target temperature for melting an agent.

In one example, a sensor of the at least one sensors 701 monitors the temperature of a region of the surface having raw build material thereon to provide the first temperature feedback signal.

In one example, a sensor of the at least one sensors 701 monitors the temperature of a region of the surface having agent deposited thereon to provide the second temperature feedback signal.

According to another example there is provided a temperature controller 705 for heating a surface while fabricating a 3-D object. The temperature controller 705 controls the energy radiated by an energy source during a first stage of the fabrication process using a first temperature feedback signal, and controls the energy radiated by the energy source during a second stage of the fabrication process using a second temperature feedback signal.

An example described above provides multi-phase based temperature control, which enables energy delivery to be driven and stabilized with the appropriate temperature reference according to the aim of a particular phase of the fabrication process.

An example described above provides an optimal energy delivery mechanism which is able to target the desired temperature at the different phases during the printing of a layer or across multiple layers. This can help optimize energy delivery, and help avoid excess energy usage which goes in an opposite direction to the maximization of selectivity between agent covered parts and raw material, or any other colored part. An example enables optimal melting control by delivering the right amount of energy, and thus improving the overall layer printing process.

In the examples described above, it is noted that first and second locations during one cycle of a fabrication process, for example during fabrication of one layer of a build process, may be different to the first and second locations during a second or other subsequent cycles.

It should be noted that the above-mentioned descriptions illustrate rather than limit the examples, and that other examples may be provided without departing from the scope of the appended claims. The word "comprising" does not exclude the presence of elements or stages other than those listed in a claim, "a" or "an" does not exclude a plurality, and a single processor or other unit may fulfil the functions of several units recited in the claims. Any reference signs in the claims shall not be construed so as to limit their scope.

## Claims

1. A method of heating a surface while fabricating a 3-D object, the method being **characterized in that** it comprises:
monitoring, by at least one sensor (701), the temperature of first and second locations on a surface, and
outputting, by the at least one sensor, a first temperature feedback signal from the first location and a second temperature feedback signal from the second location;
controlling the energy radiated by an energy source during a first stage of the fabrication process (501) using the first temperature feedback signal from the first location on the surface, the first location having raw build material; to thereby control the first location to be at a first target temperature during the first stage; and
controlling the energy radiated by the energy source during a second stage of the fabrication process (503) using the second temperature feedback signal from the second location on the surface, the second location having build material with agent deposited thereon, to thereby control the second location to be at a second target temperature during the second stage.

2. A method as claimed in claim 1, comprising determining the first location or the second location, wherein determining comprises:
analysing image data received from thermal or optical imaging to determine a region of the build material having agent deposited thereon, or a region of the build material having no agent deposited thereon; or
analysing specification data of the 3-D object to determine a region of the build material having agent deposited thereon, or a region of the build material having no agent deposited thereon.

3. A method as claimed in claim 1, wherein changing between first and second stages is triggered by:
an occurrence of an event;
a time period elapsing; or
a temperature signal reaching a threshold value.

4. A method as claimed in claim 1, wherein controlling the energy radiated by an energy source comprises heating an entire build surface to a first or second target temperature, or heating a region of the build surface to the first or second target temperature.

5. A method as claimed in claim 1, wherein the first stage comprises a pre-heating stage.

6. A method as claimed in claim 1, wherein the second stage comprises a fusing stage.

7. Apparatus for generating a 3-D object (700), the apparatus comprising:
an agent distributor to deposit an agent on build material;
an energy source (703); the apparatus **characterised by** comprising:
at least one sensor (701) to monitor the temperature of a plurality of regions of a surface, and to output at least one temperature feedback signal for each of the plurality of regions;
a temperature controller (705) to control the energy radiated by the energy source during a first stage of the build process using a first temperature feedback signal received from a first location, the first location having raw build material, to thereby control the first location to be at a first target temperature during the first stage;
and to control the energy radiated by the energy source during a second stage of the build process using a second temperature feedback signal received from a second location, the second location having build material with agent deposited thereon by the agent distributor, to thereby control the second location to be at a second target temperature during the second stage.

## Patentansprüche

1. Verfahren zum Erwärmen einer Oberfläche bei der Herstellung eines 3D-Objekts, **dadurch gekennzeichnet, dass** es Folgendes umfasst:
Überwachen, durch mindestens einen Sensor (701), der Temperatur der ersten und zweiten Stelle auf einer Oberfläche; und
Ausgeben, durch den mindestens einen Sensor, eines ersten Temperatur-Rückkopplungssignals von der ersten Stelle und eines zweiten Temperatur-Rückkopplungssignals von der zweiten Stelle;
Steuern der Energie, die von einer Energiequelle während einer ersten Stufe des Herstellungsverfahrens (501) abgestrahlt wird, unter Verwendung des ersten Temperatur-Rückkopplungssignals von der ersten Stelle auf der Oberfläche, wobei die erste Stelle Rohbaumaterial aufweist; um dadurch die erste Stelle so zu steuern, dass sie während der ersten Stufe eine erste Zieltemperatur aufweist; und
Steuern der Energie, die von der Energiequelle während einer zweiten Stufe des Herstellungsverfahrens (503) abgestrahlt wird, unter Verwendung des zweiten Temperatur-Rückkopplungssignals von der zweiten Stelle auf der Oberfläche, wobei die zweite Stelle Baumaterial aufweist, auf dem ein Mittel abgelagert ist, um dadurch die zweite Stelle so zu steuern, dass sie während der zweiten Stufe eine zweite Zieltemperatur aufweist.

2. Verfahren nach Anspruch 1, das ein Bestimmen der ersten Stelle oder der zweiten Stelle umfasst, wobei das Bestimmen Folgendes umfasst:
Analysieren von Bilddaten, die von einer thermischen oder optischen Bildgebung empfangen wurden, um einen Bereich des Baumaterials zu bestimmen, auf dem sich ein Mittel abgelagert hat, oder einen Bereich des Baumaterials, auf dem sich kein Mittel abgelagert hat; oder
Analysieren von Spezifikationsdaten des 3D-Objekts, um einen Bereich des Baumaterials zu bestimmen, auf dem sich ein Mittel abgelagert hat, oder einen Bereich des Baumaterials, auf dem sich kein Mittel abgelagert hat.

3. Verfahren nach Anspruch 1, wobei ein Wechsel zwischen der ersten und zweiten Stufe ausgelöst wird durch:
ein Auftreten eines Ereignisses;
eine verstrichene Zeitspanne; oder
ein Temperatursignal, das einen Schwellenwert erreicht.

4. Verfahren nach Anspruch 1, wobei das Steuern der Energie, die von einer Energiequelle abgestrahlt wird, ein Erwärmen einer gesamten Baufläche auf eine erste oder zweite Zieltemperatur oder ein Erwärmen eines Bereichs der Baufläche auf die erste oder zweite Zieltemperatur umfasst.

5. Verfahren nach Anspruch 1, wobei die erste Stufe eine Vorwärmstufe umfasst.

6. Verfahren nach Anspruch 1, wobei die zweite Stufe eine Schmelzstufe umfasst.

7. Vorrichtung zur Erzeugung eines 3D-Objekts (700), wobei die Vorrichtung Folgendes umfasst:
einen Mittelverteiler, um ein Mittel auf dem Baumaterial abzulagern;
eine Energiequelle (703);
wobei die Vorrichtung **dadurch gekennzeichnet ist, dass** dieselbe Folgendes umfasst:
mindestens einen Sensor (701) zur Überwachung der Temperatur mehrerer Bereiche einer Oberfläche und zur Ausgabe mindestens eines Temperatur-Rückkopplungssignals für jeden der mehreren Bereiche;
einen Temperaturregler (705) zum Steuern der Energie, die von der Energiequelle während einer ersten Stufe des Bauprozesses abgestrahlt wird, unter Verwendung eines ersten Temperatur-Rückkopplungssignals, das von einer ersten Stelle empfangen wird, wobei die erste Stelle Rohbaumaterial aufweist, um dadurch die erste Stelle so zu steuern, dass sie während der ersten Stufe eine erste Zieltemperatur aufweist;
und zum Steuern der Energie, die von der Energiequelle während einer zweiten Stufe des Bauprozesses abgestrahlt wird, unter Verwendung eines zweiten Temperatur-Rückkopplungssignals, das von einer zweiten Stelle empfangen wird, wobei die zweite Stelle Baumaterial aufweist, auf dem ein Mittel abgelagert ist, um dadurch die zweite Stelle so zu steuern, dass sie während der zweiten Stufe eine zweite Zieltemperatur aufweist.

## Revendications

1. Procédé de chauffage d'une surface lors de la fabrication d'un objet 3D, le procédé étant **caractérisé en ce qu'**il comprend :
la surveillance, par au moins un capteur (701), de la température de premier et second emplacements sur une surface, et
l'émission, par l'au moins un capteur, d'un premier signal de rétroaction de température du premier emplacement et d'un second signal de rétroaction de température du second emplacement ;
la régulation de l'énergie rayonnée par une source d'énergie pendant une première étape du processus de fabrication (501) à l'aide du premier signal de rétroaction de température du premier emplacement sur la surface, le premier emplacement ayant un matériau de fabrication brut ; pour réguler ainsi le premier emplacement de manière à ce qu'il soit à une première température cible pendant la première étape ; et
la régulation de l'énergie rayonnée par la source d'énergie pendant une second étape du processus de fabrication (503) à l'aide du second signal de rétroaction de température du second emplacement sur la surface, le second emplacement ayant un matériau de fabrication sur lequel est déposé un agent, pour réguler ainsi le second emplacement de manière à ce qu'il soit à une second température cible pendant la seconde étape.

2. Procédé selon la revendication 1, comprenant la détermination du premier emplacement ou du second emplacement, la détermination comprenant :
l'analyse de données d'image reçues en provenance d'un dispositif imageur thermique ou optique pour déterminer une région du matériau de fabrication sur laquelle un agent a été déposé, ou une région du matériau de fabrication sur laquelle aucun agent n'a été déposé ; ou
l'analyse de données de spécification de l'objet 3D pour déterminer une région du matériau de fabrication sur laquelle un agent a été déposé, ou une région du matériau de fabrication sur laquelle aucun agent n'a été déposé.

3. Procédé selon la revendication 1, **caractérisé en ce que** le passage de la première à la seconde étape est déclenché par :
une occurrence d'un événement ;
l'écoulement d'une période de temps ; ou
l'atteinte par un signal de température d'une valeur seuil.

4. Procédé selon la revendication 1, dans lequel la régulation de l'énergie rayonnée par une source d'énergie comprend le chauffage d'une surface de fabrication entière à hauteur d'une première ou d'une seconde température cible, ou le chauffage d'une région de la surface de fabrication à hauteur de la première ou de la seconde température cible.

5. Procédé selon la revendication 1, la première étape comprenant une étape de préchauffage.

6. Procédé selon la revendication 1, la seconde étape comprenant une étape de fusion.

7. Appareil de génération d'objet 3D (700), l'appareil comprenant :
un distributeur agent servant à déposer un agent sur du matériau de fabrication ;
une source d'énergie (703) ;
l'appareil étant **caractérisé en ce qu'**il comprend :
au moins un capteur (701) destiné à surveiller la température d'une pluralité de régions d'une surface, et à émettre au moins un signal de rétroaction de température pour chacune de la pluralité de régions ;
un régulateur de température (705) destiné à réguler l'énergie rayonnée par la source d'énergie pendant une première étape du processus de fabrication à l'aide d'un premier signal de rétroaction de température reçu en provenance d'un premier emplacement, le premier emplacement ayant un matériau de fabrication brut, pour réguler ainsi le premier emplacement de manière à ce qu'il soit à une première température cible lors de la première étape ;
et destiné à réguler l'énergie rayonnée par la source d'énergie pendant une seconde étape du processus de fabrication à l'aide d'un second signal de rétroaction de température reçu en provenance d'un second emplacement, le second emplacement ayant un matériau de fabrication sur lequel un agent ayant été déposé par le distributeur d'agent, pour réguler ainsi le second emplacement de manière à ce qu'il soit à une seconde température cible pendant la second étape.
